# EUROPÄISCHE PATENTSCHRIFT

(11) **EP 1 527 013 B1**
(45) Veröffentlichungstag und Bekanntmachung des Hinweises auf die Patenterteilung: **07.11.2007**
(21) Anmeldenummer: 03732341.7
(22) Anmeldetag: 10.05.2003
(51) Int. Cl.: C01B 17/04, B01D 53/86

(54) **VERFAHREN ZUR ABTRENNUNG VON SCHWEFELWASSERSTOFF AUS KOKSOFENGAS MIT NACHFOLGENDER GEWINNUNG VON ELEMENTAREM SCHWEFEL IN EINER CLAUS-ANLAGE**
METHOD FOR ISOLATING HYDROGEN SULPHIDE FROM COKE-OVEN GAS WITH THE SUBSEQUENT RECOVERY OF ELEMENTAL SULPHUR IN A CLAUS PLANT
PROCEDE POUR SEPARER DE L'ACIDE SULFHYDRIQUE DE GAZ DE COKERIE ET OBTENIR DU SOUFRE ELEMENTAIRE DANS UNE INSTALLATION CLAUS

(30) Priorität: 25.07.2002 DE 10233819
(43) Veröffentlichungstag der Anmeldung: 04.05.2005
(73) Patentinhaber: Uhde GmbH, 44141 Dortmund (DE)
(72) Erfinder: THIELERT, Holger, 44379 Dortmund (DE)
(74) Vertreter: Albrecht, Rainer Harald
(86) Internationale Anmeldenummer: PCT/EP2003/004899
(87) Internationale Veröffentlichungsnummer: WO 2004/014792

(56) Entgegenhaltungen:
- EP-A- 0 672 618
- WO-A-01/30692
- DE-A- 3 843 295
- GB-A- 769 995
- US-A- 5 628 977

## Beschreibung

Die Erfindung betrifft ein Verfahren zur Abtrennung von Schwefelwasserstoff aus Koksofengas mit nachfolgender Gewinnung von elementarem Schwefel in einer Claus-Anlage, bei dem der Schwefelwasserstoff durch Gaswäsche mit einer Absorptionsflüssigkeit aus dem Koksofengas entfernt wird, die beladene Absorptionsflüssigkeit regeneriert wird und dabei in konzentrierter Form anfallender Schwefelwasserstoff der Claus-Anlage zugeführt wird,
wobei der Schwefelwasserstoff in einem Claus-Kessel der Claus-Anlage mit Luftsauerstoff unter Bildung von elementarem Schwefel umgesetzt wird,
wobei das den Claus-Kessel verlassende Prozessgas in einem Abhitzekessel auf eine zur Kondensation des Schwefels erforderliche Temperatur abgekühlt wird, nach Abscheidung des Schwefels erwärmt und einem Reaktionsofen der Claus-Anlage zugeführt wird, in welchem Schwefelverbindungen an einem Katalysator in elementaren Schwefel umgesetzt werden, und
wobei das den Reaktionsofen verlassende Prozessgas auf eine zur Kondensation des Schwefels erforderliche Temperatur abgekühlt sowie der kondensierte Schwefel abgeschieden wird.

Koksofengas enthält Schwefelwasserstoff, der vor der Verwendung in einer Gaswäsche entfernt werden muss. Bei der Regeneration der zur Gaswäsche eingesetzten, beladenen Absorptionsflüssigkeit fällt Schwefelwasserstoff in konzentrierter Form an, der in einer nachgeschalteten Claus-Anlage in elementaren Schwefel umgewandelt wird. Kernstück der Claus-Anlage ist ein Kessel mit einer Brennkammer, wo bei hohen Temperaturen von mehr als 800 °C Schwefelwasserstoff mit Luftsauerstoff in elementaren Schwefel umgewandelt wird. Die Grundreaktion des Verfahrens ist

2H₂S+O₂→S₂+2H₂O.

Die Reaktion ist stark exotherm und damit sehr temperaturabhängig. Entsprechend dem Reaktionsgleichgewicht fällt etwa 70 % des Schwefelwasserstoffes als Elementarschwefel an, der durch Abkühlung des Prozessgases in einem nachgeschalteten Abhitzekessel durch Kondensation ausgeschieden wird. In nachfolgenden Reaktionsöfen, die auch als Katalysatorstufen bezeichnet werden, werden Restgehalte an Schwefelwasserstoff und Schwefeldioxid gemäß der Reaktionsgleichung

3H₂S+SO₂→3/8S₈+2H₂O

an Katalysatoren in Schwefel umgesetzt. Die Claus-Reaktoren werden bei Temperaturen unterhalb von 350 °C betrieben. Im Rahmen der bekannten Maßnahmen wird die Claus-Anlage stets mit mindestens zwei in Reihe geschalteten und bei unterschiedlichen Temperaturniveaus betriebenen Claus-Reaktoren ausgeführt, um hohe Schwefelausbeuten zu erzielen. Zwischen den in Reihe geschalteten Claus-Reaktoren ist eine Zwischenkühlung zur Abscheidung von kondensiertem elementaren Schwefel vorgesehen. Eine Claus-Anlage des beschriebenen Aufbaus und mit der angegebenen Zweckbestimmung ist in Ullmanns Encyklopädie der technischen Chemie, Band 21, Seiten 8 bis 13 beschrieben.

US-A-5 628 977 (HEISEL MICHAEL ET AL) offenbart ein Verfahren zur Behandlung von H₂S-haltigen Abgasen in einer Claus-Anlage, wobei das Gas in einen Claus-Kessel geführt wird, danach Schwefel durch Kondensation abgetrennt wird, das Prozessgas einem Reaktionsofen mit Katalysator zugeführt wird, wobei dessen Arbeitstemperatur zwischen 170 und 220°C liegt, das den Reaktionsofen verlassende Prozessgas abgekühlt und elementarer Schwefel durch Kondensation abgetrennt wird. Nach Abscheidung des kondensierten Schwefels wird das Prozessgas einer Nachverbrennung zugeführt, gewaschen und in den Claus-Kessel zurückgeführt.

Eine Claus-Anlage bestehend aus einem Claus-Kessel und zwei nachgeschalteten Katalysatorstufen mit Zwischenkühlungen ist apparativ aufwendig. Der Erfindung liegt die Aufgabe zugrunde, durch eine Verfahrensänderung den apparativen Aufwand zu reduzieren.

Ausgehend von dem eingangs beschriebenen Verfahren wird die Aufgabe erfindungsgemäß dadurch gelöst, dass die Claus-Anlage nur mit einem einzigen Reaktionsofen betrieben und in diesem eine Arbeitstemperatur von weniger als 250 °C eingestellt wird und dass das den Reaktionsofen verlassende Prozessgas nach Abscheidung des kondensierten Schwefels mit einem im Reaktionsofen nicht umgesetzten Restgehalt an Schwefelwasserstoff in das zu reinigende Koksofengas vor der Gaswäsche zurückgeführt wird. Vorzugsweise wird der Reaktionsofen in einem Temperaturbereich zwischen 200 °C und 230 °C betrieben.

Erfindungsgemäß wird die Claus-Anlage nur mit einem Claus-Kessel und einer einzigen nachgeschalteten Katalysatorstufe ausgebildet, die im Vergleich zum Stand der Technik bei einer niedrigeren Temperatur betrieben wird. Dabei wird in Kauf genommen, dass der umgesetzte Anteil an H₂S bezogen auf die der Claus-Anlage zugeführte Schwefelwasserstoff-menge geringer ist als im Stand der Technik bei Verwendung einer Claus-Anlage mit zwei oder mehr Katalysatorstufen. Erfindungsgemäß wurde bei einer Betrachtung des Gesamtprozesses erkannt, dass höhere Schwefelgehalte im Abgas der Claus-Anlage tolerabel sind, wenn das Abgas in das zu reinigende Koksofengas zurückgeführt und mit diesem zusammen der Gaswäsche unterworfen wird. Die Gaswäsche ist so ausgelegt, dass ein durch die erfindungsgemäße Rückführung höherer Gehalt an Schwefelwasserstoff im Koksofengas sich auf den Schwefelwasserstoffgehalt in dem gereinigten Gas nicht auswirkt. Insofern macht die Gaswäsche eine zweite oder dritte Katalysatorstufe der Claus-Anlage überflüssig. Durch das erfindungsgemäße Verfahren kann die Claus-Anlage anlagentechnisch sehr einfach ausgeführt werden. Auch die regelungstechnische Seite der Claus-Anlage vereinfacht sich erheblich.

Weitere Ausgestaltungen des erfindungsgemäßen Verfahrens sind in den nachgeordneten Patentansprüchen 3 bis 6 beschrieben und werden im Folgenden anhand eines Ausführungsbeispiels erläutert. Es zeigen schematisch
- Fig. 1: ein stark vereinfachtes Blockschaltbild des erfindungsgemäßen Verfahrens,
- Fig. 2: eine Claus-Anlage, die im Rahmen des erfindungsgemäßen Verfahrens eingesetzt wird.

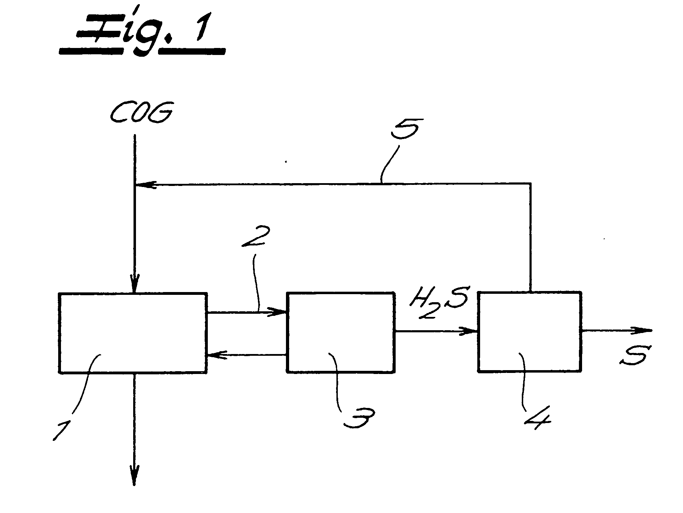

Gemäß dem in Fig. 1 in Form eines Blockschaltbildes dargestellten Verfahren wird Schwefelwasserstoff aus Koksofengas COG abgetrennt und in einer nachgeschalteten Claus-Anlage in elementaren Schwefel S umgewandelt. Der Schwefelwasserstoff wird durch Gaswäsche 1 mit einer Absorptionsflüssigkeit aus Koksofengas entfernt. Die beladene Absorptionsflüssigkeit 2 wird in einer Stufe 3 regeneriert. Dabei fällt Schwefelwasserstoff in konzentrierter Form dampfförmig an, der einer Claus-Anlage 4 zugeführt wird. In der Claus-Anlage 4 wird Schwefelwasserstoff in elementaren Schwefel S umgewandelt, der in flüssiger Form abgezogen wird. Es fällt ferner ein Prozessgas 5 an, das einen nicht umgesetzten Restgehalt an Schwefelwasserstoff enthält und in das zu reinigende Koksofengas COG vor der Gaswäsche 1 zurückgeführt wird.

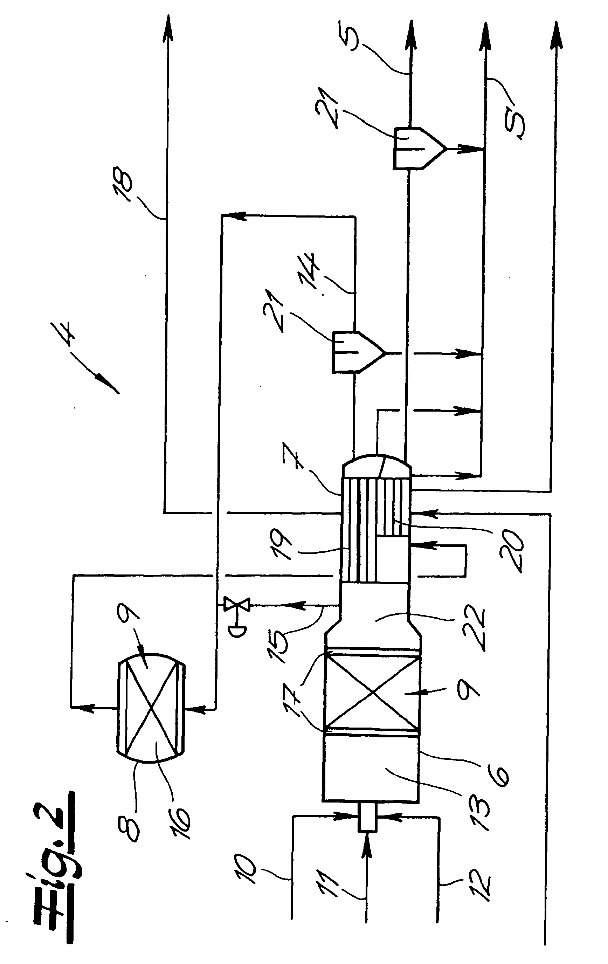

Der Aufbau der Claus-Anlage 4 ist in Fig. 2 dargestellt. Zum grundsätzlichen Aufbau dieser Anlage gehören ein Claus-Kessel 6, ein Abhitzekessel 7 sowie ein Reaktionsofen 8 mit einer Katalysatorschüttung 9. Ein Schwefelwasserstoff enthaltender Aufgabestrom 10 wird zusammen mit Luft 11 und Heizgas 12 in eine Brennkammer 13 des Claus-Kessels 6 eingespeist und bei Temperaturen von ca. 1200 °C in einer exothermen Reaktion unter Bildung von elementarem Schwefel umgesetzt. Das den Claus-Kessel 6 verlassende Prozessgas wird in dem Abhitzekessel 7 auf eine zur Kondensation des Schwefels erforderliche Temperatur von weniger als 170 °C abgekühlt. Elementarer Schwefel S wird kondensiert und abgeschieden. Nach Abscheidung des Schwefels wird das Prozessgas 14 unter Zumischung eines aus dem Claus-Kessel 6 entnommenen Teilstromes 15 erwärmt und dem Reaktionsofen 8 der Claus-Anlage zugeführt. In dem Reaktionsofen 8 werden Schwefelwasserstoff und Schwefeldioxid an Katalysatoren 16 in elementaren Schwefel umgesetzt. Der Reaktionsofen 8 wird mit einer Arbeitstemperatur von weniger als 250 °C, vorzugsweise in einem Temperaturbereich zwischen 200 °C und 230 °C betrieben.

Der Fig. 2 ist zu entnehmen, dass die Claus-Anlage 4 nur mit einem einzigen Reaktionsofen 8 ausgeführt ist. Das den Reaktionsofen 8 verlassende Prozessgas wird auf eine zur Kondensation des Schwefels erforderliche Temperatur abgekühlt. Nach Abscheidung des kondensierten Schwefels wird das Prozessgas 5, das noch einen Restgehalt an Schwefelwasserstoff enthält, in das zu reinigende Koksofengas COG vor der Gaswäsche 1 zurückgeführt. Gemäß einer bevorzugten Ausführung des erfindungsgemäßen Verfahrens wird die Claus-Anlage 4 so betrieben, dass 80 bis 85 % des Schwefelwasserstoffes in elementaren Schwefel umgesetzt und als Kondensat abgezogen wird.

Als Claus-Kessel 6 wird ein feuerfest ausgekleideter Kessel in liegender Ausführung verwendet, der eine Brennkammer 13 und einem horizontal anschließenden, beidseitig von gasdurchlässigen Gittersteinen 17 begrenzten Katalysatorraum mit einer Katalysatorschüttung 9 aufweist.

In dem Abhitzekessel 7 wird sowohl der aus dem Claus-Kessel 6 austretende, etwa 1200 °C heiße Gasstrom als auch der mit einer Temperatur von weniger als 250 °C aus dem Reaktionsofen 8 austretende Prozessgasstrom auf eine Temperatur unterhalb der Kondensationstemperatur von elementarem Schwefel abgekühlt. Dabei wird ein niedergespannter Dampf 18 erzeugt. Der Abhitzekessel 7 weist ein erstes Rohrbündel 19 aus Wärmeaustauscherohren auf, die von dem aus dem Claus-Kessel 6 austretenden Prozessgas durchströmt werden. Der Abhitzekessel 7 weist ferner ein zweites Rohrbündel 20 aus Wärmetauscherrohren auf, die von dem aus dem Reaktionsofen 8 austretenden Prozessgas durchströmt werden. Die Rohrbündel 19, 20 sind in einem gemeinsamen Dampferzeugerraum angeordnet. Elementarer Schwefel kondensiert bereits im Abhitzekessel 7 und wird in flüssiger Form aus dem Abhitzekessel 7 sowie nachgeschalteten Abscheidern 21 abgezogen.

Zur Erwärmung des dem Reaktionsofen 8 zugeführten Prozessgases 14 wird ein Teilstrom 15 aus dem Claus-Kessel abgezweigt. Die Abzweigleitung ist an den Umfang eines feuerfest ausgekleideten abströmseitigen Raumes 22 des Claus-Kessels 6 angeschlossen und mündet in die zum Kessel benachbarte Prozessgasleitung ein. Im Mündungsbereich der Abzweigleitung ist ein Ventilkörper verstellbar angeordnet, mit dem der Mengenstrom des aus der Abzweigleitung austretenden heißen Gasstromes regelbar ist. Der Ventilkörper und eine dem Ventilkörper zugeordnete Stelleinrichtung wird von dem Prozessgas 14, welches durch die Prozessgasleitung geführt wird, gekühlt, so dass übliche metallische Werkstoffe für den Ventilkörper verwendet werden können.

## Patentansprüche

1. Verfahren zur Abtrennung von Schwefelwasserstoff aus Koksofengas mit nachfolgender Gewinnung von elementarem Schwefel in einer Claus-Anlage, bei dem der Schwefelwasserstoff durch Gaswäsche mit einer Absorptionsflüssigkeit aus dem Koksofengas entfernt wird, die beladene Absorptionsflüssigkeit regeneriert wird und dabei in konzentrierter Form anfallender Schwefelwasserstoff der Claus-Anlage zugeführt wird,
wobei der Schwefelwasserstoff in einem Claus-Kessel der Claus-Anlage mit Luftsauerstoff unter Bildung von elementarem Schwefel umgesetzt wird,
wobei das den Claus-Kessel verlassende Prozessgas in einem Abhitzekessel auf eine zur Kondensation des Schwefels erforderliche Temperatur abgekühlt wird, nach Abscheidung des Schwefels erwärmt und einem Reaktionsofen der Claus-Anlage zugeführt wird, in welchem Schwefelverbindungen an einem Katalysator in elementaren Schwefel umgesetzt werden, und
wobei das den Reaktionsofen verlassende Prozessgas auf eine zur Kondensation des Schwefels erforderliche Temperatur abgekühlt sowie der kondensierte Schwefel abgeschieden wird,
**dadurch gekennzeichnet, dass** die Claus-Anlage nur mit einem einzigen Reaktionsofen betrieben und in diesem eine Arbeitstemperatur von weniger als 250 °C eingestellt wird und dass das den Reaktionsofen verlassende Prozessgas nach Abscheidung des kondensierten Schwefels mit einem im Reaktionsofen nicht umgesetzten Restgehalt an Schwefelwasserstoff in das zu reinigende Koksofengas vor der Gaswäsche zurückgeführt wird.

2. Verfahren nach Anspruch 1, **dadurch gekennzeichnet, dass** der Reaktionsofen in einem Temperaturbereich zwischen 200 °C und 230 °C betrieben wird.

3. Verfahren nach Anspruch 1 oder 2, **dadurch gekennzeichnet, dass** als Claus-Kessel ein feuerfest ausgekleideter Kessel in liegender Ausführung verwendet wird, der eine Brennkammer und einen horizontal anschließenden, beidseitig von gasdurchlässigen Gittersteinen begrenzten Katalysatorraum mit einer Katalysatorschüttung aufweist.

4. Verfahren nach einem der Ansprüche 1 bis 3, **dadurch gekennzeichnet, dass** der Abhitzekessel ein erstes Rohrbündel aus Wärmetauscherrohren aufweist, die von dem aus dem Claus-Kessel austretenden Prozessgas durchströmt werden, dass der Abhitzekessel ein zweites Rohrbündel aus Wärmetauscherrohrer aufweist, die von dem aus dem Reaktionsofen austretendem Prozessgas durchströmt werden und dass die Rohrbündel in einem gemeinsamen Dampferzeugerraum angeordnet sind, in dem niedergespannter Dampf erzeugt wird.

5. Verfahren nach einem Ansprüche 1 bis 4, **dadurch gekennzeichnet, dass** elementarer Schwefel flüssig aus dem Abhitzekessel abgezogen wird.

6. Verfahren nach einem der Ansprüche 1 bis 5, **dadurch gekennzeichnet, dass** aus dem heißen Prozessgas, welches den Claus-Kessel verlässt, ein Teilstrom abgezweigt und dem Prozessstrom, der dem Reaktionsofen zugeführt wird, zur Erwärmung zugemischt wird.

## Claims

1. Method for isolating hydrogen sulphide from coke oven gas with subsequent recovery of elemental sulphur in a Claus plant, in which the hydrogen sulphide is removed from the coke oven gas by means of gas scrubbing using an absorption liquid, the charged absorption liquid is regenerated and any hydrogen sulphide which accumulates in concentrated form is passed to the Claus plant,
wherein the hydrogen sulphide is reacted with oxygen in the air, in a Claus boiler of the Claus plant, to form elemental sulphur,
wherein the process gas leaving the Claus boiler is cooled in a waste heat boiler to a temperature required for condensation of the sulphur, heated after precipitation of the sulphur and passed to a reaction oven of the Claus plant, in which sulphur compounds are converted to elemental sulphur on a catalyst, and
wherein the process gas leaving the reaction oven is cooled to a temperature required for condensation of the sulphur and the condensed sulphur is precipitated,
**characterised in that** the Claus plant is operated with only a single reaction oven and a working temperature of less than 250°C is set therein, and **in that** the process gas leaving the reaction oven, after precipitation of the condensed sulphur, is passed back into the coke oven gas to be cleaned, ahead of gas scrubbing, with a residual content of hydrogen sulphide that was not converted in the reaction oven.

2. Method according to claim 1, **characterised in that** the reaction oven is operated in a temperature range between 200°C and 230°C.

3. Method according to claim 1 or 2, **characterised in that** the Claus boiler used is a boiler lined with a refractory material, lying horizontally, which has a combustion chamber and, horizontally thereafter, a catalyst chamber containing a catalyst bulk material which is delimited on both sides by gas-permeable checker bricks.

4. Method according to one of claims 1 to 3, **characterised in that** the waste heat boiler has a first tube bundle composed of heat exchanger tubes which are flowed through by the process gas exiting from the Claus boiler, **in that** the waste heat boiler has a second tube bundle composed of heat exchanger tubes which are flowed through by the process gas exiting from the reaction oven, and **in that** the tube bundles are arranged in a common steam generator chamber, in which low-pressure steam is generated.

5. Method according to one of claims 1 to 4, **characterised in that** elemental sulphur is drawn off from the waste heat boiler in liquid form.

6. Method according to one of claims 1 to 5, **characterised in that** a partial stream is branched out of the hot process gas leaving the Claus boiler and is mixed into the process stream that is passed to the reaction oven, in order to heat it.

## Revendications

1. Procédé de séparation de sulfure d'hydrogène de gaz de four à coke avec récupération consécutive de soufre élémentaire dans un atelier de type Claus, dans lequel le sulfure d'hydrogène est éliminé du gaz de four à coke par lavage du gaz avec un liquide d'absorption, le liquide d'absorption saturé est régénéré et le sulfure d'hydrogène produit en forme concentrée est alors envoyé dans l'atelier de type Claus,
le sulfure d'hydrogène étant converti dans une chaudière de type Claus de l'atelier de type Claus par de l'oxygène atmosphérique en formant du soufre élémentaire,
le gaz de fabrication sortant de la chaudière de type Claus étant refroidi dans une chaudière de récupération à une température requise pour la condensation du soufre, étant réchauffé après séparation du soufre et envoyé dans un four de réaction de l'atelier de type Claus, dans lequel des composés sulfurés sont convertis sur un catalyseur en soufre élémentaire, et
le gaz de fabrication sortant du four de réaction étant refroidi à une température requise pour la condensation du soufre et le soufre condensé étant séparé,
**caractérisé en ce que** l'atelier de type Claus n'est exploité qu'avec un unique four de réaction et une température de travail de moins de 250°C est réglée dans ce dernier, et **en ce que** le gaz de fabrication sortant du four de réaction, après séparation du soufre condensé, est recyclé dans le gaz de four à coke à laver en amont du lavage du gaz, avec une teneur résiduelle en sulfure d'hydrogène, non convertie dans le four de réaction.

2. Procédé suivant la revendication 1, **caractérisé en ce que** le four de réaction est exploité dans une plage de températures comprises entre 200°C et 230°C.

3. Procédé suivant l'une des revendications 1 et 2, **caractérisé par** l'utilisation, en tant que chaudière de type Claus, d'une chaudière en mode de réalisation horizontal munie d'un revêtement réfractaire, laquelle présente une chambre de combustion et un espace catalytique avec un lit de catalyseur, se raccordant horizontalement et délimité de part et d'autre par des briques d'empilage perméables aux gaz.

4. Procédé suivant l'une des revendications 1 à 3, **caractérisé en ce que** la chaudière de récupération comporte un premier faisceau tubulaire constitué de tubes d'échange thermique, balayés par le gaz de fabrication sortant de la chaudière de type Claus, **en ce que** la chaudière de récupération comporte un second faisceau tubulaire constitué de tubes d'échange thermique, balayés par le gaz de fabrication sortant du four de réaction, et **en ce que** les faisceaux tubulaires sont disposés dans un espace générateur de vapeur commun, dans lequel est produite de la vapeur à basse pression.

5. Procédé suivant l'une des revendications 1 à 4, **caractérisé en ce que** du soufre élémentaire est soutiré en phase liquide de la chaudière de récupération.

6. Procédé suivant l'une des revendications 1 à 5, **caractérisé en ce qu'**un courant partiel est dérivé du gaz de fabrication chaud, sortant de la chaudière de type Claus, et mélangé pour réchauffage au flux de gaz de fabrication, envoyé dans le four de réaction.
